Europäisches Patentamt

**European Patent Office**

Office européen des brevets

(11) Numéro de publication: **0 122 854**

**A1**

(12) # DEMANDE DE BREVET EUROPEEN

(21) Numéro de dépôt: **84400710.4**

(22) Date de dépôt: **11.04.84**

(51) Int. Cl.³: **G 01 S 7/02**
**H 04 B 1/48**

(30) Priorité: **15.04.83 FR 8306156**

(43) Date de publication de la demande:
**24.10.84 Bulletin 84/43**

(84) Etats contractants désignés:
**BE CH DE FR GB IT LI NL SE**

(71) Demandeur: **SOCIETE NATIONALE D'ETUDE ET DE CONSTRUCTION DE MOTEURS D'AVIATION, "S.N.E.C.M.A."**
**2 Boulevard Victor**
**F-75015 Paris(FR)**

(72) Inventeur: **Delon, Patrice Charles Gaston**
**8, rue Louis-Philippe**
**F-92200 Neuilly(FR)**

(72) Inventeur: **Engel, Roger**
**3, Résidence Monceau**
**F-78420 Carrieres sur Seine(FR)**

(74) Mandataire: **Moinat, François**
**S.N.E.C.M.A. Service des Brevets Boîte Postale 81**
**F-91003 Evry Cedex(FR)**

(54) Dispositif de découplage des voies émission et réception dans un radar à antenne unique.

(57) L'invention est relative à un dispositif de découplage entre les voies émission et réception d'un radar à émission continue et à antenne unique. Ce dispositif comprend deux moyens de modulation (22, 25) comportant des éléments actifs du type à jonctions, connectés, d'une part, à un unique moyen de couplage (23) lui-même connecté à l'antenne (20), et, d'autre part, l'un aux moyens d'émission (21) et l'autre aux moyens de réception (26).

FIG. 3a

EP 0 122 854 A1

Croydon Printing Company Ltd.

## DISPOSITIF DE DECOUPLAGE DES VOIES EMISSION ET RECEPTION DANS UN RADAR A ANTENNE UNIQUE

La présente invention est relative au système radar à antenne unique.

Dans de nombreuses applications telles que notamment les engins aéroportés et en particulier les missiles, on utilise des radars à émission continue. Ceux-ci sont utilisés, par exemple, comme module altimétrique ou comme radar de proximité pour détecter la distance minimale d'approche de la cible visée par le missile et déclencher la mise à feu d'une charge explosive.

Les engins aéroportés sont généralement de petites dimensions et, de ce fait, conduisent à une concentration importante du matériel électronique embarqué à bord de ceux-ci. Dans le cas de radar à émission continue, l'utilisation de deux antennes distinctes pour l'émission et la réception est le plus souvent impossible tant à cause de la place disponible que du découplage nécessaire entre antennes. De ce fait, l'utilisation d'une antenne unique est nécessaire pour ce type d'application.

L'utilisation d'une antenne unique pour la voie émission et la voie réception pose le problème essentiel de l'isolation des circuits de réception par rapport aux circuits d'émission.

Dans les dispositifs de l'art antérieur deux solutions sont utilisées pour résoudre de problème. L'une d'elle consiste à disposer un élément directif à trois bornes du type circulateur à ferrites qui présente l'avantage de permettre une émission et une réception simultanée, mais dont l'inconvénient est de limiter l'isolation des voies émission et réception à un niveau assez faible d'environ 20 dB.

L'autre solution, qui améliore sensiblement le niveau d'isolation, consiste à remplacer le circulateur par un commutateur reliant alternativement l'antenne aux circuits d'émission et aux circuits de réception. Un inconvénient de cette solution est la complexité de ce commutateur pour obtenir une isolation suffisante entre les deux voies émission et réception.

Le dispositif selon l'invention vise à remédier à ces inconvénients par l'utilisation de moyens d'atténuation de la voie émission et de la voie réception alternativement et d'un élément de liaison, par exemple du type coupleur, entre l'antenne et les voies d'émission et de réception.

Selon une caractéristique de l'invention, le dispositif de découplage entre les voies émission et réception d'un radar à émission continue à antenne unique comporte deux moyens de modulation à éléments actifs du type à jonctions connectés, d'une part, à un unique moyen de couplage lui-même connecté à l'antenne, et d'autre part, l'un aux moyens d'émissions, l'autre aux moyens de réception.

D'autres avantages et caractéristiques de l'invention ressortiront de la description qui suit, illustrée à l'aide des figures qui représentent :

- la figure 1, un exemple de radar à émission continue de l'art antérieur utilisant un dispositif d'isolation du type circulateur,

- la figure 2, un exemple de radar à émission continue de l'art antérieur utilisant un dispositif d'isolation du type commutateur,

- la figure 3a, un exemple de réalisation du dispositif d'isolation selon l'invention,

- la figure 3b, un mélangeur à diodes du type en anneau,

- la figure 4, un modulateur à diodes du type à bande latérale unique.

Une des caractéristiques du dispositif selon l'invention est la suppresion du moyen d'isolation assurant la jonction entre l'antenne unique, la voie émission et la voie réception dans les dispositifs de l'art antérieur.

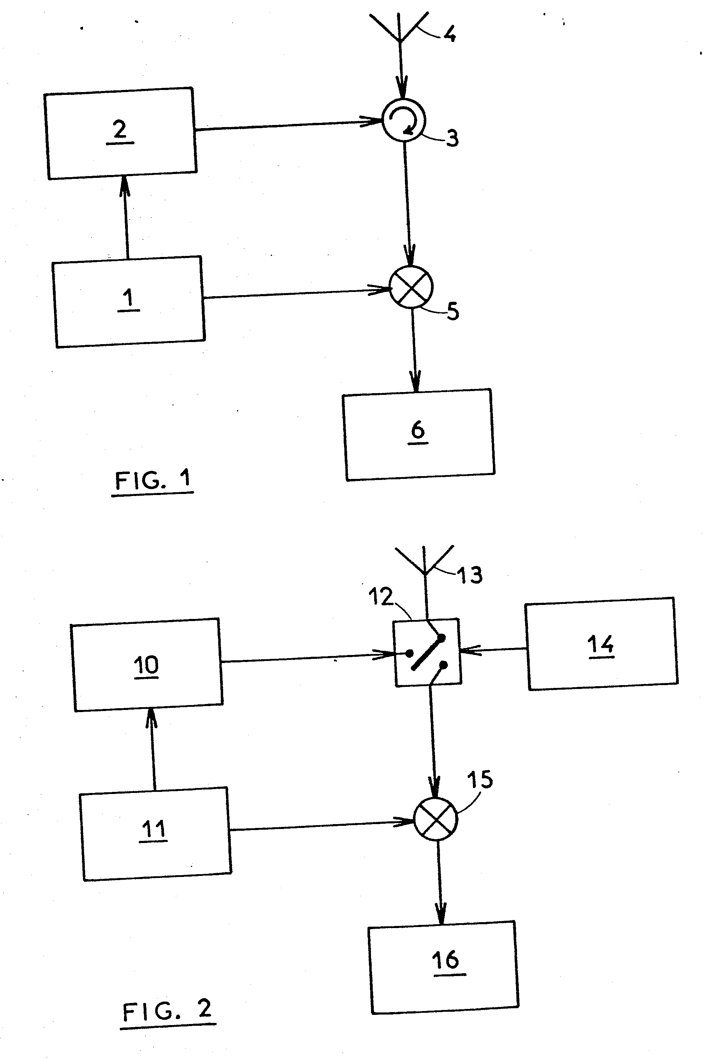

La figure 1 représente un radar à émission continue de l'art antérieur. Il comporte une antenne 4 connectée à un circulateur 3, par exemple du type à ferrites, un oscillateur 1 connecté, d'une part, au circulateur 3, par l'intermédiaire d'un moyen de modulation 2, et d'autre part, à un mélangeur 5, lui-même connecté au circulateur 3 et à un moyen 6 assurant le traitement du signal issu du radar.

Le fonctionnement d'un tel dispositif est le suivant : le signal correspondant à la porteuse pure, issue de l'oscillateur 1, est modulé selon un processus quelconque par le moyen de modulation 2. Le signal résultant est ensuite transmis à l'antenne 4 par le circulateur 3. Simultanément le signal reçu par cette même antenne 4 est transmis par le circulateur 3 au mélangeur 5 qui assure la transposition du signal reçu en un signal pouvant être pris en compte par le moyen de traitement du signal 6 qui extrait de la

4

0122854

loi de modulation, l'information souhaitée (par exemple distance ou vitesse).

La figure 2 montre un second exemple de radar à émission continue de l'art antérieur utilisant un commutateur.

Il comporte un oscillateur 11 connecté à un commutateur 12 par l'intermédiaire d'un moyen de modulation 10 d'une part et d'un mélangeur 15 d'autre part.

Le commutateur 12 est également connecté à l'antenne 13 et à un circuit de commande 14 pouvant être piloté par le moyen de traitement du signal 16 relié à la sortie du mélangeur 15.

Le fonctionnement d'un tel dispositif est identique à celui décrit précédemment au commutateur 12 près. Celui-ci est basculé alternativement sur la voie émission ou sur la voie réception assurant ainsi une émission et une réception isolées l'une de l'autre mais non simultanées.

Ce commutateur 12 est généralement réalisé à partir d'éléments actifs du type diodes qui, polarisées en sens inverse, permettent une bonne isolation, et polarisées en sens direct n'introduisent qu'une faible perte.

Du fait du domaine généralement élevé des fréquences utilisées, ces commutateurs sont onéreux et délicats à réaliser pour obtenir une bonne isolation.

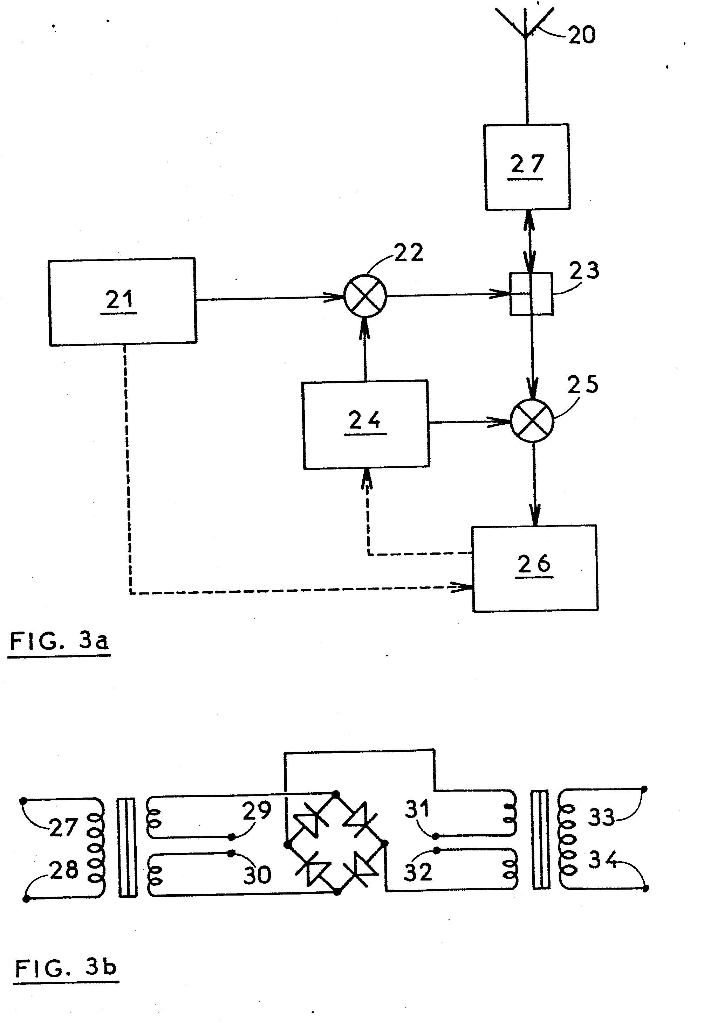

La figure 3a montre un premier exemple de réalisation du dispositif selon l'invention.

Ce dispositif comporte un ensemble émetteur 21 connecté en série avec un mélangeur 22, par exemple du type en anneau, un coupleur 23, un filtre 27, par exemple du type passe-bande et une antenne 20. Un moyen de modulation 24 est connecté au premier mélangeur 22 et à un second mélangeur 25, lui-même connecté au coupleur 23 et à un moyen de traitement du signal 26 pouvant éventuellement commander le moyen de modulation 24.

Le fonctionnement de ce dispositif est le suivant.

L'ensemble émetteur 21 fournit un signal à une fréquence fo. Ce signal est modulé en phase égale à o ou $\pi$ par le mélangeur 22 recevant des signaux logiques par exemple sous la forme de séquences pseudo-aléatoires du moyen de modulation 24. Ce signal modulé est transmis à l'antenne 20 par le moyen de couplage 23 qui peut par exemple être du type coupleur directif à 3dB. Parallèlement ce même signal de modulation est transmis, avec un retard éventuel, au second mélangeur 25 de façon à démoduler le signal émis. Le signal résultant est transmis au moyen de traitement du signal de façon à extraire l'information désirée, par exemple le décalage doppler ou l'information distance. L'isolation entre les voies émission et réception est assurée, d'une part, par la directivité du coupleur 23 en tenant compte du degré d'adaptation de l'antenne 20, et, d'autre part, par les deux mélangeurs 22 et 25 qui sont alternativement alimentés par le signal de modulation. L'absence du signal de modulation sur l'un des mélangeurs provoque le blocage dudit mélangeur et donc une atténuation importante du signal de la voie correspondante.

Dans cet exemple non limitatif de réalisation du dispositif selon l'invention, c'est donc le moyen de modulation 24 associé aux deux mélangeurs 22 et 25 qui assure la commutation entre émission et réception et l'isolation des deux voies correspondantes.

La modulation étant nécessaire à tout dispositif radar à émission continue, on obtient un résultat identique à celui de l'art antérieur par suppression d'un élément de réalisation difficile, circulateur ou commutateur.

La figure 3b montre un exemple de réalisation de mélangeur permettant une modulation biphasée 0,$\pi$ de l'exemple de réalisation précédent.

Ce montage connu est généralement désigné sous le terme de modulateur en anneau. Il comporte deux transformateurs, généralement à noyaux de ferrites, et quatre diodes présentant une jonction du type Schottky.

Dans un montage en modulateur biphasé, ce modulateur en anneau est connecté de la façon suivante.

Les bornes 28, 29, 30 et 34 sont reliées à la masse électrique, la borne 27 est reliée à la sortie de l'ensemble émetteur 21, les bornes 31 et 32 sont reliées à la sortie du moyen de modulation 24 et la borne 33 est reliée au coupleur 23.

Selon un autre mode de réalisation du dispositif selon l'invention, l'ensemble émetteur 21 délivre une onde à la fréquence fo déjà modulée selon une loi déterminée quelconque. Les mélangeurs 22 et 25 ont alors pour effet secondaire, outre l'isolation entre les voies émission et réception, une dispersion du spectre émis, pour le mélangeur 22, et une reconstitution du signal, pour le mélangeur 25, et donc une plus grande discrétion et une meilleure résistance au sources de brouillage éventuelles.

Cet effet secondaire est un autre avantage du dispositif selon l'invention. Dans ce mode de réalisation au moins une liaison, non représentée sur la figure 3a, est à prévoir entre l'ensemble émetteur 21 et le moyen de traitement du signal 26.

Selon un autre mode de réalisation du dispositif selon l'invention, le moyen de modulation 24 peut générer des signaux autres que logiques et notamment des signaux sinusoïdaux dont la fréquence $f_1(t)$ varie selon une loi temporelle périodique. Ce signal à la fréquence $f_1$ (t) est alors transmis aux mélangeurs 22 et 25 avec des retards convenables, de façon à générer à l'émission une modulation de fréquence du signal à la fréquence fo issu de l'ensemble émetteur 21. Dans ce mode de réalisation deux moyens analogiques sont prévus dans le moyen de modulation 24 pour interrompre alternativement la transmission du signal de modulation et du signal de fréquence fo (t) aux mélangeurs 22 et 25.

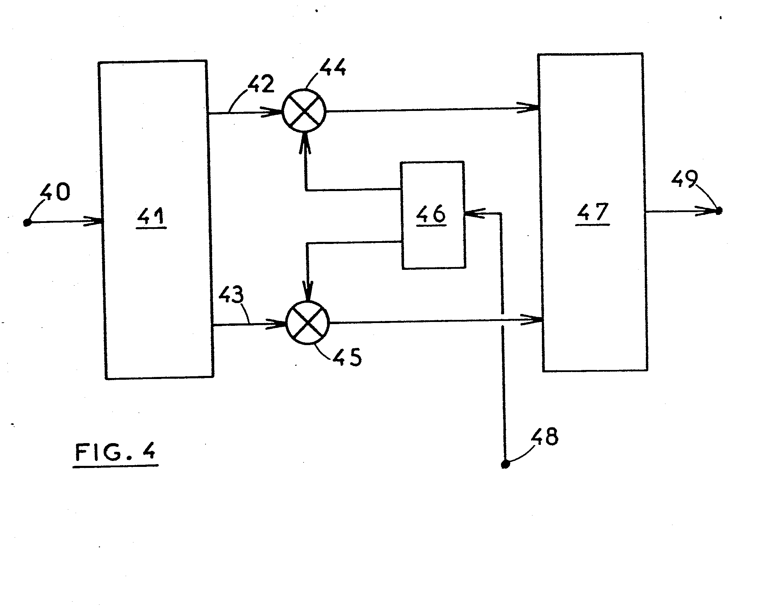

Selon un autre mode de réalisation du dispositif selon l'invention, les deux mélangeurs 22 et 25 sont remplacés par des modulateurs du type à bande latérale unique. La figure 4 représente un exemple connu de réalisation d'un tel modulateur à bande latérale unique. Il comporte un coupleur 41 recevant le signal de l'ensemble émetteur 21 et divisant ce signal en deux signaux de même puissance en quadrature l'un par rapport à l'autre, deux mélangeurs 44 et 45,par exemple du type à diodes, en anneau précédemment décrit, un diviseur de puissance par deux 46 relié au moyen de modulation 24 et délivrant deux signaux de même amplitude et de phases relatives égales et un second coupleur 47 du même type, diviseur de puissance en quadrature, que le premier coupleur 41.

La borne de sortie 49 du second coupleur 47 est connectée au moyen de couplage 23.

Un tel dispositif, connu de l'homme de l'art, permet de décaler la fréquence fo du signal appliqué sur la borne 40 d'entrée du premier coupleur 41 d'une valeur égale à la fréquence fg du signal de modulation appliqué sur la borne d'entrée 48 du diviseur de puissance 46. Le signal de sortie, sur la borne 49, est donc à une fréquence fo - fg ou fo + fg.

L'utilisation de ce modulateur dans le dispositif selon l'invention permet également d'obtenir l'isolation entre les voies émission et réception du fait de la présence des deux mélangeurs 44 et 45 commandés simultanément.

Le radar ainsi réalisé est du type à onde pure dont la fréquence est une fonction du temps.

La réalisation du dispositif selon l'invention n'est pas limitée aux seuls types de mélangeurs ou de modulateurs décrits précédemment ; tout type de mélangeur ou de modulateur comportant des éléments actifs à jonctions ne sort pas du domaine de l'invention.

## REVENDICATIONS

1. Dispositif de découplage entre les voies émission et réception d'un radar à émission continue et à antenne unique caractérisé en ce qu'il comprend deux moyens de modulation (22, 25) comportant des éléments actifs, du type à jonctions, connectés, d'une part, à un unique moyen de couplage (23) lui-même connecté à l'antenne (20), et, d'autre part, l'un aux moyens d'émission (21) et l'autre aux moyens de réception (26).

2. Dispositif de découplage selon la revendication 1, caractérisé en ce que les moyens de modulation (22, 25) comportent au moins un élément mélangeur à diode du type en anneau.

3. Dispositif de découplage selon la revendication 2, caractérisé en ce que les éléments mélangeurs sont connectés à des moyens (24) générant des signaux logiques tels que les moyens de modulation de la voie émission (22) et de la voie réception (25) ne reçoivent jamais simultanément ces signaux logiques.

4. Dispositif de découplage selon la revendication 3, caractérisé en ce que le ou les mélangeurs à diodes du moyen de modulation qui ne reçoit pas les signaux logiques est positionné de manière à bloquer les diodes du ou des mélangeurs.

5. Dispositif de découplage selon l'une quelconque des revendications 1 à 4, caractérisé en ce que l'unique moyen de couplage (23) est du type hybride à 3dB.

6. Dispositif de découplage selon l'une quelconque des revendications 1 à 4, caractérisé en ce que l'unique moyen de couplage (23) est du type diviseur de puissance par deux.

FIG. 1

FIG. 2

0122854

FIG. 3a

FIG. 3b

FIG. 4

**0122854**

Numéro de la demande

# Office européen des brevets

# RAPPORT DE RECHERCHE EUROPEENNE

EP 84 40 0710

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | US-A-2 419 564 (J.E. KEISTER)<br>* En entier *<br><br>--- | 1-5 | G 01 S 7/02<br>H 04 B 1/48 |
| Y | GB-A- 791 431 (ELECTRIC AND MUSICAL INDUSTRIES)<br>* Figure 1; page 2, lignes 21-108 *<br><br>--- | 5 | |
| P,X | EP-A-0 100 887 (SIEMENS-ALBIS)<br>* Figures 1,2; page 2, ligne 1 - page 3, ligne 32 *<br><br>--- | 1-3,5 | |
| P,X | EP-A-0 083 895 (MEYER et al.)<br>* Figures 2,4,5; page 4, ligne 19 - page 6, ligne 35; page 7, ligne 4 - page 8, ligne 16 *<br><br>--- | 1-3,5 | |
| A | US-A-3 688 207 (LEWIS C. MORRIS)<br>* Figure 3; colonne 3, ligne 46 - colonne 5, ligne 9 *<br><br>--- | 1,5 | DOMAINES TECHNIQUES RECHERCHES (Int. Cl. 3)<br><br>G 01 S<br>H 04 B |
| A | FR-A-2 209 210 (THOMSON-CSF)<br>* Figure 6; page 10, ligne 4 - page 11, ligne 32 *<br><br>--- | 1 | |
| A | FR-A-2 254 915 (INTERNATIONAL STANDARD ELECTRIC CORP.)<br><br>----- | | |

Le présent rapport de recherche a été établi pour toutes les revendications

| Lieu de la recherche | Date d'achèvement de la recherche | Examinateur |
|---|---|---|
| LA HAYE | 12-07-1984 | CANNARD J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

------------

& : membre de la même famille, document correspondant

OEB Form 1503. 03.82